# EUROPÄISCHE PATENTANMELDUNG

(11) **EP 1 431 099 A1**
(43) Veröffentlichungstag der Anmeldung: **23.06.2004**
(21) Anmeldenummer: 03028866.6
(22) Anmeldetag: 16.12.2003
(51) Int. Cl.: B60K 31/00

(54) **Verfahren zum Steuern und/oder Regeln einer Tempomateinrichtung, insbesondere für Traktoren mit einem Stufenlosgetriebe**

(30) Priorität: 19.12.2002 DE 10259423
(71) Anmelder: ZF FRIEDRICHSHAFEN AG, 88038 Friedrichshafen (DE)
(72) Erfinder: Haas, Werner, 4400 Enns (AT)

(57) **Zusammenfassung**

Es wird ein Verfahren zum Steuern und/oder Regeln einer Tempomateinrichtung, insbesondere für Traktoren mit Stufenlosgetriebe vorgestellt, bei dem die aktuelle Fahrzeuggeschwindigkeit und die aktuelle Motordrehzahl als Eingangsgrößen verwendet werden, wobei als zusätzliche Eingangsgröße ein berechnetes Hydrostatlastsignal verwendet wird und wobei aus den Eingangsgrößen die Sollgetriebeübersetzung und die Sollvorgabe für den Motorregler berechnet werden.

## Beschreibung

Die vorliegende Erfindung betrifft ein Verfahren zum Steuern und/oder Regeln einer Tempomateinrichtung, insbesondere für Traktoren mit einem stufenlosen Getriebe gemäß dem Oberbegriff des Patentanspruchs 1.

Nach dem Stand der Technik werden auch bei Traktoren Tempomateinrichtungen eingesetzt, Sie ermöglichen es, das Fahrzeug mit einer über.die Bedienung frei einstellbaren Fahrzeuggeschwindigkeit zu betreiben. Hierbei ergibt sich die Geschwindigkeit aus dem Produkt der Getriebeübersetzung und der Motordrehzahl, so dass diese Größen dem Tempomatgorithmus als Eingriffsgrößen zur Verfügung stehen.

Nach dem Stand der Technik wird bei den Tempomatalgorithmen nur die Sollgetriebeübersetzung berechnet. Die Sollvorgabe für die Motordrehzahl wird über das Fahrpedal bzw. den Handgashebel von der Bedienung vorgegeben. Zudem erfolgt keine automatische Berücksichtigung von verbrauchsoptimierten Arbeitspunkten; vielmehr hat der Fahrer für diese Optimierung zu sorgen, wodurch die Arbeitsbelastung des Fahrers steigt. Beispielsweise offenbart die EP 0 967 107 A1 ein Verfahren, bei dem aus Befehls- und Zustandssignalen Steuersignale für den Antriebsmotor und das Getriebe generiert werden, wobei ein Sollgradient für die Getriebeübersetzung ermittelt wird.

Der vorliegenden Erfindung liegt die Aufgabe zugrunde, ein Verfahren zum Steuern und/oder Regeln einer Tempomateinrichtung anzugeben, welches die Nachteile des Standes der Technik vermeidet. Insbesondere soll das erfindungsgemäße Verfahren eine verbrauchsoptimierte Fahrweise ermöglichen.

Diese Aufgabe wird durch die Merkmale des Patentanspruchs 1 gelöst. Weitere Varianten und Vorteile gehen aus den Unteransprüchen hervor.

Demnach wird vorgeschlagen, als Eingangsgrößen des Verfahrens zur Steuerung und/oder Regelung einer Tempomateinrichtung die aktuelle Fahrzeuggeschwindigkeit, die aktuelle Motordrehzahl und ein berechnetes Hydrostatlastsignal zu verwenden. Anschließend wird aus diesen Eingangsgrößen die Sollgetriebeübersetzung und die Soll vorgabe für den Motorregler berechnet. Hierbei wird das Verfahren als Teil des Fahrreglers implementiert.

Hierbei wird die Sollgetriebeübersetzung vorzugsweise über den CAN-Bus an den Getrieberegler übertragen; im Getrieberegler erfolgt die Berechnung des Schwenkwinkels für die Hydrostateinheit und die Ansteuerung der gewünschten Bereichskupplung.

Im Rahmen des erfindungsgemäßen Verfahrens wird die Schalthäufigkeit reduziert. Die Sollvorgabe für die Motordrehzahl berechnet sich hierbei in vorteilhafter Weise aus der gewünschten Fahrgeschwindigkeit, dem Hydrostatlastsignal, der aktuellen Motordrehzahl und einem Verfahren zur Einstellung von verbrauchsoptimalen Motorbetriebspunkten für den Teillastbereich. Damit wird eine verbrauchsschonende Fahrweise ermöglicht, was zudem eine Reduzierung der Lärmbelästigung zur Folge hat. Erfindungsgemäß wird die Sollvorgabe für die Motordrehzahl über den CAN-Bus an den Motorregler übertragen.

Durch die mittels des hier vorgestellten Verfahrens erzielte vollständig automatisierte Steuerung von Motordrehzahl und Getriebeübersetzung wird der Fahrer entlastet. Ein weiterer Vorteil besteht darin, dass durch die automatische Einstellung von verbrauchsoptimalen Betriebspunkten eine Reduktion des Verbrauches erfolgt, ohne dass der Fahrer eingreift, was insbesondere bei ungeübten Fahrern von Bedeutung ist.

Außerdem wird durch die Verwendung des Algorithmus zur Reduktion der Schalthäufigkeit eine bauteil- bzw. klauenschonende Fahrweise ermöglicht.

## Patentansprüche

1. Verfahren zum Steuern und/oder Regeln einer Tempomateinrichtung, insbesondere für Traktoren mit Stufenlosgetriebe, bei dem die aktuelle Fahrzeuggeschwindigkeit und die aktuelle Motordrehzahl als Eingangsgrößen verwendet werden, **dadurch gekennzeichnet, dass** als zusätzliche Eingangsgröße ein berechnetes Hydrostatlastsignal verwendet wird, wobei aus den Eingangsgrößen die Sollgetriebeübersetzung und die Sollvorgabe für den Motorregler berechnet werden.

2. Verfahren nach Anspruch 1, **dadurch gekennzeichnet, dass** die Sollgetriebeübersetzung an den Getrieberegler übertragen wird und dass im Getrieberegler die Berechnung des Schwenkwinkels für die Hydrostateinheit und die Ansteuerung der gewünschten Bereichskupplung erfolgt.

3. Verfahren nach Anspruch 2, **dadurch gekennzeichnet, dass** die Sollgetriebeübersetzung an den Getrieberegler über'den CAN-Bus übertragen wird.

4. Verfahren nach einem der vorstehenden Ansprüche, **dadurch gekennzeichnet, dass** die Sollvorgabe für die Motordrehzahl bzw. für den Motorregler aus der gewünschten Fahrgeschwindigkeit, dem Hydrostatlastsignal und der aktuellen Motordrehzahl unter Berücksichtigung von verbrauchsoptimalen Motorbetriebspunkten berechnet wird, so dass verbrauchsoptimale Betriebspunkte eingestellt werden.

5. Verfahren nach einem der vorstehenden Ansprüche, **dadurch gekennzeichnet, dass** die Sollvorgabe für die Motordrehzahl über den CAN-Bus an den Motorregler übertragen wird.

6. Verfahren nach einem der vorstehenden Ansprüche, **dadurch gekennzeichnet, dass** es als Teil des Fahrreglers implementiert wird.
